# EUROPÄISCHE PATENTSCHRIFT

(11) **EP 1 462 757 B1**
(45) Veröffentlichungstag und Bekanntmachung des Hinweises auf die Patenterteilung: **23.12.2009**
(21) Anmeldenummer: 04004879.5
(22) Anmeldetag: 02.03.2004
(51) Int. Cl.: G01B 5/00, G01B 5/008

(54) **Vorrichtung zum Erfasssen der räumlichen Lage eines in einer Koordinatenachse verfahrbaren Schlittens**
Device for the assessment of the spacial position of a cage sliding along a coordinate axis
Dispositif pour l'évaluation de la position spatiale d'un chariot coulissant le long d'un axe de coordonnées

(30) Priorität: 24.03.2003 DE 10313036
(43) Veröffentlichungstag der Anmeldung: 29.09.2004
(73) Patentinhaber: Klingelnberg GmbH, 42499 Hückeswagen (DE)
(72) Erfinder: Mies, Georg, 51688 Wipperfürth (DE)
(74) Vertreter: Menges, Rolf

(56) Entgegenhaltungen:
- DE-A- 3 150 977
- DE-A- 3 526 919
- DE-A- 4 308 456
- DE-A- 4 345 094

## Beschreibung

Die Erfindung betrifft eine Vorrichtung nach dem Oberbegriff des unabhängigen Patentanspruchs 1.

Bei der Vorrichtung bedeutet die Erfassung der räumlichen Lage des Schlittens, dass nicht nur die Primärbewegung in der gewünschten Koordinatenrichtung erfasst werden soll, sondern dass auch alle übrigen durch Führungsfehler verursachten kleineren Bewegungen in Richtung der insgesamt sechs Freiheitsgrade eines starren Körpers im Raum erfasst werden sollen.

Aus der DE 31 50 977 A sind Verfahren und eine Einrichtung bekannt zur Ermittlung und Korrektur von Führungsfehlem von geführten Maschinenteilen, wobei diese Einrichtung der eingangs genannten Vorrichtung entspricht. Bei einem ersten Verfahren werden relevante Führungsfehler einer Messmaschine ermittelt und durch Korrekturfunktionen angenähert, die im Rechner der Maschine gespeichert werden. Bei den nachfolgenden Messungen werden die fehlerhaften Ergebnisse der Koordinatenmesseinrichtung mit Hilfe der Korrekturfunktionen berichtigt. Bei einem zweiten Verfahren werden an den verschieblichen Teilen der Messmaschine Zusatzmesseinrichtungen befestigt, die den Abstand zu sich in Verschieberichtung erstreckenden Bezugslinien messen. Mit diesen Messeinrichtungen werden die Führungsfehler während des Messvorganges laufend erfasst. Der Rechner der Messmaschine benutzt die Ausgangssignale der Zusatzmesseinrichtungen, um die fehlerbehafteten Ergebnisse der Koordinatenmesseinrichtung zu korrigieren. Bei einem dritten Verfahren dienen die vorhandenen Führungsflächen der Maschine als Bezugslinien, was weniger aufwendig ist, und die einmal durch Messung gegen ein Linearitätsnormal ermittelten Abweichungen werden in Form einer Näherungsfunktion gespeichert und zur permanenten Korrektur der Messwerte der Zusatzmesseinrichtungen verwendet. Bei diesem dritten Verfahren, das eine Kombination der beiden erstgenannten Verfahren darstellt, gleiten die Spitzen von Zusatztastern an den Führungsflächen. Zur Ausführung der beiden erstgenannten Verfahren wird ein prismatisches Bezugsnormal eingesetzt, das sich parallel zu der Führung eines Schlittens erstreckt. Das Bezugsnormal trägt auf einer ersten und auf einer zweiten Fläche Linienraster, von denen eines zweidimensional ist. Ein Positionsmesssystem dient zur Bestimmung der räumlichen Lage eines mit dem Schlitten fest verbundenen Tragkörpers, an dem Leseköpfe angebracht sind und der an dem Bezugsnormal geführt ist. Die Leseköpfe oder der Tragkörper werden dazu direkt auf Flächen des Bezugsnormals aufgesetzt. Ein solches Messsystem, das die Verschiebung in einer Koordinate misst und den Einfluss aller Führungsfehler mit erfasst, ist beispielsweise zum Anbau an die Führungen einer Mess- oder Bearbeitungsmaschine geeignet, die dann in der Positioniergenauigkeit erheblich verbessert sein soll. Bei dem ersten Verfahren wird angenommen, dass die Führungsfehler konstant sind, einmal ausgemessen und als Näherungsfunktion gespeichert werden können und sich bei späteren Messungen berücksichtigen lassen. Bei dem zweiten Verfahren werden Führungsfehler laufend gemessen, allerdings wegen des größeren Aufwandes nur die relevanten. Das dritte Verfahren macht den Einsatz einer Näherungsfunktion und die permanente Korrektur der Messwerte der Zusatzmesseinrichtungen erforderlich. In allen Fällen dient das Bezugsnormal als eine mechanische Führung für den Tragkörper, was grundsätzlich von Nachteil ist.

Aus der DE 43 45 094 A ist eine Formmessmaschine bekannt, die ein von den Führungsmitteln und den Stelleinrichtungen der Maschine entkoppeltes Bezugssystem zur Bahnkorrektur an den Führungen aufweist, das maßgenaue längliche Normale enthält, die parallel zu den einzelnen Koordinatenachsen von Verschiebeschlitten ausgerichtet angeordnet sind und die von auf den Führungsmitteln verfahrbaren Teilen laufend abtastbar sind. Das Bezugssystem ist keinen größeren Kräften ausgesetzt und so beschaffen, dass seine Geometrie langzeitstabil und wenig temperaturabhängig ist. Diese bekannte Formmessmaschine zeichnet sich zwar durch gute Führungsverhältnisse für die Verschiebeschlitten aus, der Aufwand dafür ist jedoch beträchtlich, und zwar sowohl was den apparativen Aufwand anbetrifft als auch was den messtechnischen Aufwand anbetrifft. Das Bezugssystem besteht nämlich aus drei Normalen, die jeweils von im Querschnitt rechteckigen Profilschienen gebildet sind, welche auf zwei einander benachbarten Seitenflächen Abtastbahnen tragen. Das erste Normal ist auf dem Maschinenbett gelagert. Das zweite Normal ist an der Stirnseite einer vertikalen Säule befestigt und darüber hinaus an einem Ende mit Winkelteilen versehen, welche die Abtastbahnen des ersten Normals übergreifen, so dass das zweite Normal mit dem ersten Normal gekoppelt ist. Entsprechend ist das dritte Normal mit dem zweiten Normal gekoppelt. An den beiden Kopplungsstellen zwischen den drei Normalen sind jeweils mehrere Sensoren vorgesehen, die jede Relativbewegung zwischen zwei Normalen an deren Kopplungsstelle nach Lage und Richtung erfassen. Sie werden einem Rechner zugeleitet, der daraus entsprechende Korrekturwerte für das Messergebnis oder für die räumliche Lage des Tastelements berechnet. Durch diesen Aufbau soll erreicht werden, dass die bekannte Formmessmaschine ein besseres dynamisches Verhalten und kürzere Neben- und Messzeiten erlaubt als eine Formmessmaschine mit einem extrem steifen Maschinenbett, das häufig aus Granit hergestellt ist und auf dem über einen Verschiebeschlitten die vertikale Säule abgestützt ist, welche ihrerseits wiederum entweder massiv oder in schwerer Guss- oder Stahlschweißkonstruktion aufgebaut ist.

Aus der WO-A-99/17073 ist eine Vorrichtung bekannt zur Erfassung von sechs Komponenten der Relativbewegung zweier Körper bei einer primär zweidimensional translatorischen Grundbewegung. Die Körper sind eine mit einer zweidimensionalen, optischen Gitterteilung versehene Platte und ein Element, das eine zu der Platte parallele, ebene Fläche und als Lesekopf mehrere optische Gitter aufweist. Das Element wird der Platte derart angenähert, dass die optischen Gitter über Auswertung der Intensitätsschwankungen des reflektierten Lichts eine Erfassung von zu der Platte parallelen Relativverschiebungen in X- und Y-Richtung erlauben. Zur Abstandserfassung zwischen dem Element und der Platte sind mindestens drei Abstandserfassungseinrichtungen vorgesehen, die kapazitiv, induktiv oder als Taster ausgebildet sind. Zum Erfassen der räumlichen Lage eines in einer Koordinatenachse längs einer Führung verfahrbaren Schlittens, also zur Erfassung einer primär eindimensionalen Bewegung ist die bekannte Vorrichtung weniger geeignet, da sie dafür zu aufwendig ist.

Die GB 2 034 880 A offenbart eine Vorrichtung, die ebenfalls speziell zur Durchführung von linearen Messungen in zwei Dimensionen ausgebildet ist. Zusätzlich ist dafür ein Wagen auf Führungsschienen in zwei Dimensionen über eine Basis beweglich. Auf dem Wagen befindet sich eine Fläche, auf welche ein zu messender Gegenstand aufgebracht werden kann. Die Unterseite der Fläche trägt ein erstes optisches Gitter aus zueinander rechtwinkelig angeordneten parallelen Linien. Eine Sonde ist oberhalb der Fläche angeordnet. Auf der Basis unterhalb des Wagens sind zwei Leseköpfe angeordnet, um Bewegungen des Wagens in zwei senkrechten Richtungen zu erfassen. Auch diese bekannte Vorrichtung eignet sich aufgrund ihres Aufbaus nicht zum Erfassen der räumlichen Lage eines in einer Koordinatenachse längs einer Führung verfahrbaren Schlittens bei einer Werkzeugmaschine oder einem Messgerät.

Die DE 43 08 456 A, auf der der Oberbegriff des Patentanspruchs 1 basiert, offenbart eine Vorrichtung, die zur Lagebestimmung eines prismatischen Positionierkörpers relativ zu einem Bezugskörper die sechs Freiheitsgrade des Positionierkörpers bezüglich des Bezugskörpers erfasst. Der Positionierkörper trägt auf der einen von zwei rechtwinkelig zueinander angeordneten Flächen zwei Maßstäbe und auf der anderen Fläche einen Maßstab. Die drei Maßstäbe sind als optische Abtaster in Form von CCD-Zeilen ausgebildet. Der Bezugskörper trägt drei Projektoren, die den drei Maßstäben zugeordnet sind. Jeder Projektor sendet drei divergierende Lichtebenen oder -strahlen aus, die sich in einem Projektionszentrum schneiden und je drei Lichtmarken auf die Maßstäbe projizieren. Aus der Lage der einzelnen Lichtmarken auf den Maßstäben können die räumliche Lage der Projektionszentren längs des Bezugskörpers und ihr Abstand zu den entsprechenden Flächen des Bezugskörpers berechnet werden. Durch diese Messwerte ist die Position des Positionierkörpers in seinen sechs Freiheitsgraden gegenüber dem Bezugskörper bestimmt.

Aus der DE 35 26 919 A ist eine Messeinrichtung zur Bestimmung der Positioniergenauigkeit von frei programmierbaren Handhabungsgeräten wie zum Beispiel Industrierobotem bekannt. Die Messeinrichtung erlaubt eine Bestimmung der Positioniergenauigkeit solcher Geräte in allen sechs Freiheitsgraden während der Ausführung einer vorprogrammierten Bewegung durch das Handhabungsgerät. Dafür werden bei der Messeinrichtung sechs voneinander unabhängige Messsignale durch sechs in geeigneter Anordnung befindliche Messwertaufnehmer aufgezeichnet, die von dem zu vermessenden Handhabungsgerät relativ zu einer Schablone bewegt werden, welche die Idealkontur der gewünschten Bewegung verkörpert. Als Messwertaufnehmer werden beispielshalber fünf induktive, analoge Abstandsmesser und ein digitaler Infrarot-Sensor verwendet, montiert in einem integrierten Messkopf, der, angeflanscht an das zu untersuchende Handhabungsgerät, in etwa gleichbleibendem Abstand über die Schablone geführt wird.

Aufgabe der Erfindung ist es, eine Vorrichtung der eingangs genannten Art so auszubilden, dass Geometriefehler in einer linearen Achse von Werkzeugmaschinen oder Messgeräten ohne Einfluss bleiben, indem laufend die räumliche Lage des entsprechenden Schlittens direkt erfasst wird, wobei die Vorrichtung in einen Maschinen- oder Messgeräteaufbau integrierbar sein soll.

Diese Aufgabe ist erfindungsgemäß durch eine Vorrichtung der eingangs genannten Art gelöst, die die im kennzeichnenden Teil des Patentanspruchs 1 angegebenen Merkmale aufweist.

Bei der Vorrichtung nach der Erfindung ist der Schlitten längs einer Führung verfahrbar, das Bezugsnormal ist ein prismatisches Bezugsnormal und das Positionsmesssystem ist zur Bestimmung der räumlichen Lage eines mit dem Schlitten fest verbundenen oder in den Schlitten integrierten Tragkörpers ausgebildet. Bei der Vorrichtung nach der Erfindung tragen die erste und die zweite Fläche des Bezugsnormals zweidimensionale Linienraster, die durch das Positionsmesssystem erfassbar sind, das dafür drei beabstandete Leseköpfe und einen Abstandssensor aufweist, wobei die Anordnung des Tragkörpers an dem verfahrbaren Schlitten so getroffen ist, dass der Tragkörper auf dem gesamten Fahrweg und beim gleichzeitigen Erfassungsvorgang nicht mit dem Bezugsnormal in Berührung kommen kann. Aufgrund dieser Merkmale lässt sich unabhängig von der mechanischen Führungsqualität des Schlittens und der Reproduzierbarkeit der betreffenden Koordinatenachse folgendes durch das in die Vorrichtung integrierte Positionsmesssystem erreichen: Wenn der Schlitten beispielsweise einen Messtaster trägt, lässt sich zu jedem Zeitpunkt seine genaue Lage relativ zum Koordinatenursprung und damit auch zum Messobjekt bestimmen, was zu einer geringeren Messunsicherheit des Messgerätes führt. Wenn der Schlitten ein Werkzeug trägt, das in der Regel einen größeren Abstand von dem Schlitten hat, lässt sich die Solllage des Werkzeugs gegenüber dem Werkstück genauer einstellen. Der Grund für die genauere Einstellbarkeit ist, dass sich selbst kleinste Schwankungen in der Bewegung des Schlittens verstärkt am Werkzeug auswirken. Durch die Integration der Vorrichtung in einen Maschinen- oder Messgeräteaufbau werden statische oder dynamische Geometriefehler in dem Messergebnis berücksichtigt. Die Positioniergenauigkeit wird insbesondere auch dadurch erhöht, dass der Tragkörper mit dem Bezugsnormal nicht in Berührung kommen kann. Die Integrierbarkeit der erfindungsgemäßen Vorrichtung in eine Werkzeugmaschine oder in ein Messgerät wird gegenüber der aus der WO-A-99/17073 bekannten Vorrichtung dadurch erzielt, dass kein flächiges Normal und eine dazu parallele ebene Fläche erforderlich sind, deren gegenseitige Lage durch einen dreidimensional wirkenden Lesekopf und drei Abstandssensoren erfasst wird, sondern dass zur Bestimmung der räumlichen Lage eines mit dem Schlitten fest verbindbaren oder in den Schlitten integrierten Tragkörpers drei Leseköpfe und ein Abstandssensor vorgesehen werden, die zweidimensionale Linienraster an zwei Flächen eines Bezugsnormals bzw. den Abstand zwischen dem Bezugsnormal und dem Tragkörper erfassen, was es ermöglicht, die räumliche Lage eines in der Koordinatenachse längs einer Führung verfahrbaren Schlittens zu erfassen.

Bei der Vorrichtung nach der Erfindung dient das Bezugsnormal nicht als Führung für das Positionsmesssystem, so dass durch Berührung verursachte Kräfte, die das Messergebnis beeinträchtigen können, vermieden werden. Das Bezugsnormal ist von der Maschine oder dem Messgerät kräftemäßig völlig entkoppelt und wird so frei von Lager- und Führungskräften gehalten. Das durch das Positionsmesssystem ermittelte Messergebnis gibt somit stets die aktuelle Lage des Tragkörpers in Bezug auf das Bezugsnormal wieder, ungeachtet dessen, ob oder in welchem Ausmaß die Führung des Schlittens fehlerbehaftet ist. Bahnabweichungen des Schlittens gehen so in den Messvorgang direkt ein.

Bei der Vorrichtung nach der Erfindung trägt das Bezugsnormal wie der prismatische Positionierkörper der Vorrichtung nach der DE 43 08 456 A ebenfalls auf zwei Flächen Maßstäbe in Form von Linienrastern, allerdings sind diese zweidimensional ausgebildet, wobei die zugeordneten Leseköpfe nur Längenmesswerte liefern und der zusätzliche Abstandssensor einen Abstandswert liefert. Aus den Längenmesswerten und dem einen Abstandswert können dann die Werte für die sechs Freiheitsgrade des Schlittens oder Positionierkörpers berechnet werden.

Vorteilhafte Ausgestaltungen der Vorrichtung nach der Erfindung bilden die Gegenstände der abhängigen Ansprüche.

Wenn in einer Ausgestaltung der Vorrichtung nach der Erfindung die erste und die zweite Fläche zwei einander gegenüberliegende, zueinander parallele Seitenflächen des Bezugsnormals sind, kann das Bezugsnormal ein im Querschnitt rechteckiger, langgestreckter, linealartiger Körper sein. Die Position und die räumliche Lage des Tragkörpers und des mit diesem verbundenen Schlittens in Bezug auf das Bezugsnormal lassen sich so auf besonders einfache Weise erfassen.

Wenn in einer weiteren Ausgestaltung der Vorrichtung nach der Erfindung die erste und die zweite Fläche eine Seitenfläche und eine gegen diese abgewinkelte Stirnfläche des Bezugsnormals sind, kann der Tragkörper einen Aufbau haben, der in bestimmten Anwendungsfällen zweckmäßiger sein kann als in einem Fall, wenn wie bei der vorhergehenden Ausgestaltung der Vorrichtung nach der Erfindung die Linienraster auf zwei gegenüberliegenden, zueinander parallelen Flächen angeordnet sind.

Wenn in einer weiteren Ausgestaltung der Vorrichtung nach der Erfindung der Abstandssensor in einer definierten Position in Bezug auf die Leseköpfe an dem Tragkörper vorgesehen ist, kann er seinen Abstand in einer zu der Koordinatenachse rechtwinkeligen Richtung zu einer der Flächen bestimmen, die die Linienraster tragen. Durch die Anordnung der Leseköpfe und des Abstandssensors in genau definierten Positionen an dem Tragkörper können die Position und die räumliche Lage des Tragkörpers und des mit diesem verbundenen Schlittens reproduzierbar bestimmt werden.

Wenn in weiteren Ausgestaltungen der Vorrichtung nach der Erfindung das Bezugsnormal und der Tragkörper aus einem temperaturinvarianten Material bestehen, lassen sich Temperaturauswirkungen auf die Messgenauigkeit des Positionsmesssystems ausschließen.

Wenn in einer weiteren Ausgestaltung der Vorrichtung nach der Erfindung das Bezugsnormal zur Anordnung zwischen zwei beabstandeten Längsführungen, die die Führung des Schlittens bilden, ausgestaltet ist, lässt sich das Bezugsnormal an einer längs der Koordinatenachse angeordneten Halterung der Maschine oder des Messgerätes so lagern, dass Änderungen der Abmessungen oder der Position der Säule und damit der Führung des Schlittens aufgrund der hier angewandten Art der Messwertaufnahme mit erfasst werden. Bekannte Messgeräte, die für den Einsatz zumindest dieser Ausgestaltung der Vorrichtung nach der Erfindung geeignet wären, sind die Verzahnungsmesszentren Klingelnberg P 65 / P 100, die in dem so bezeichneten Firmenprospekt Nr. 1353/D/IO aus dem Jahre 2002 dargestellt und beschrieben sind.

Wenn in einer weiteren Ausgestaltung der Vorrichtung nach der Erfindung das Bezugsnormal eine langgestreckte rechteckige Platte ist, lässt diese sich so dimensionieren, dass sie sich zwischen beabstandeten Längsführungen des Schlittens auf gleicher Höhe mit denselben oder nach vorn versetzt dazu anordnen lässt.

Wenn in einer weiteren Ausgestaltung der Vorrichtung nach der Erfindung der Tragkörper im Querschnitt U-förmig ist und an seinen beiden U-Schenkeln den ersten und zweiten bzw. den dritten Lesekopf trägt, eignet er sich insbesondere zur Befestigung an dem Schlitten derart, dass die Leseköpfe die zweidimensionalen Linienraster auf zwei gegenüberliegenden, zueinander parallelen Flächen des Bezugsnormals erfassen können.

Wenn in einer weiteren Ausgestaltung der Vorrichtung nach der Erfindung der Tragkörper ein Winkelprofil ist und an seinen beiden Schenkeln den ersten und zweiten bzw. den dritten Lesekopf trägt, eignet sich das Positionsmesssystem insbesondere zur Erfassung von Linienrastern, die das Bezugsnormal auf zwei gegeneinander abgewinkelten Flächen trägt.

Wenn in einer weiteren Ausgestaltung der Vorrichtung nach der Erfindung der dritte Lesekopf an dem Tragkörper so vorgesehen ist, dass er dem ersten oder dem zweiten Lesekopf auf gleicher Höhe wie dieser in Bezug auf die Längserstreckung des Bezugsnormals gegenüber liegt, so können die beiden Leseköpfe ihre Position in der Richtung der Koordinatenachse und in einer dazu rechtwinkeligen Richtung relativ zu jeweils gegenüberliegend aufgebrachten Kreuzgitterstrukturen des Bezugsnormals erfassen. Die drei Leseköpfe sind in der Lage ein Verkippen des Tragkörpers um die Koordinatenachse und um zwei zu der Koordinatenachse reckwinkelige weitere Koordinatenachsen zu erfassen.

Ausführungsbeispiele der Erfindung werden im folgenden unter Bezugnahme auf die Zeichnungen näher beschrieben. Es zeigen
- Fig. 1: ein erstes Ausführungsbeispiel einer Vorrichtung nach der Erfindung, deren Positionsmesssystem ein Bezugsnormal aufweist, das auf zwei gegenüberliegenden, zueinander parallelen Flächen zweidimensionale Linienraster trägt, und
- Fig. 2: ein zweites Ausführungsbeispiel der Vorrichtung nach der Erfindung, deren Positionsmesssystem ein Bezugsnormal aufweist, das auf zwei gegeneinander abgewinkelten Flächen zweidimensionale Linienraster trägt.

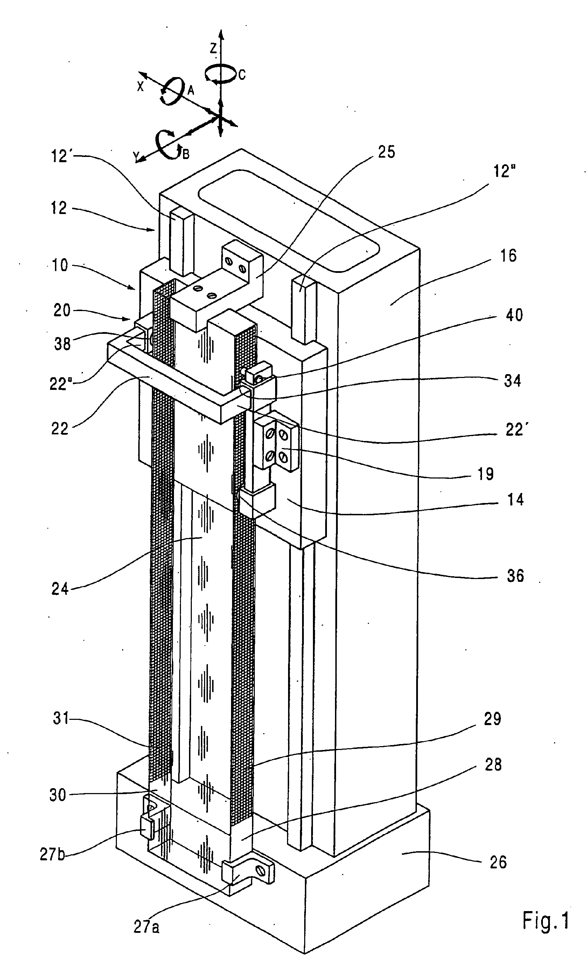

Fig. 1 zeigt eine insgesamt mit 10 bezeichnete Vorrichtung für Werkzeugmaschinen oder Messgeräte zum Erfassen der räumlichen Lage eines in Richtung einer Koordinatenachse längs einer insgesamt mit 12 bezeichneten Führung verfahrbaren Schlittens 14. In dem dargestellten Ausführungsbeispiel handelt es sich bei der Koordinatenachse um die Z-Achse eines in Fig. 1 oben dargestellten rechtwinkeligen XYZ-Koordinatensystems. Diese Darstellung veranschaulicht sechs Bewegungsfreiheitsgrade, die ein starrer Körper hat, nämlich drei translatorische Freiheitsgrade X, Y und Z und drei rotative Freiheitsgrade A, B und C. Die räumliche Lage eines Körpers wird durch die sechs Freiheitsgrade vollständig beschrieben. Der Körper, dessen räumliche Lage in dem hier beschriebenen Fall erfasst werden soll, ist der Schlitten 14. Der Schlitten 14 hat eine ausgeprägte Bewegungskoordinate in Z-Richtung. Die Bewegung in Z-Richtung einschließlich aller Bewegungskomponenten in Richtung der sechs Freiheitsgrade sollen erfasst werden. Von den Werkzeugmaschinen oder Messgeräten, für die die Vorrichtung 10 vorgesehen ist, ist hier lediglich eine Z-Säule 16 angedeutet, die als ein starrer, verwindungssteifer, langgestreckter Hohlkörper ausgebildet ist. Die Führung 12 des Schlittens 14 wird durch zwei quer zur Z-Achse beabstandete Längsführungen 12', 12" gebildet. Der Schlitten 14 hat zwei parallele Längsnuten, die die Längsführungen 12' bzw. 12" verschiebbar aufnehmen, und trägt z.B. ein 3D-Tastsystem, das hier ebenso wie ein unter der Z-Säule 16 angeordneter Schlitten, mit dem diese Säule verfahrbar ist, der Übersichtlichkeit halber weggelassen worden ist, da diese Einzelheiten für das Verständnis der Erfindung nicht notwendig sind. Aus dem gleichen Grund ist auch das Antriebssystem für den Schlitten 14 nicht dargestellt.

Zum Erfassen der räumlichen Lage des Schlittens 14 dient ein insgesamt mit 20 bezeichnetes Positionsmesssystem, mit dem sich die räumliche Lage eines durch ein Winkelstück 19 mit dem Schlitten 14 fest verbundenen Tragkörpers 22 in Bezug auf ein prismatisches Bezugsnormal 24 bestimmen lässt, das sich parallel zu der Führung 12 des Schlittens 14 erstreckt und einen polygonalen Querschnitt hat, im dargestellten Ausführungsbeispiel einen rechteckigen Querschnitt. Das Bezugsnormal 24 ist parallel zu der Z-Achse und parallel zu dem Schlitten 14 jeweils in einem festen Abstand von der Z-Säule 16 und von dem Schlitten 14 angeordnet. In dem dargestellten Ausführungsbeispiel ist das Bezugsnormal 24 eine langgestreckte rechteckige Platte, die oben durch ein Winkelstück 25 fest mit der Z-Säule 16 verbunden ist und die unten durch zwei Winkel 27a, 27b mit einer Grundplatte 26 verschiebbar verbunden ist. Die Grundplatte 26 ist starr mit der Z-Säule 16 verbunden. Das Bezugsnormal 24 besteht aus einem temperaturinvarianten Material, um Temperaturauswirkungen auf die Erfassung der räumlichen Lage des Schlittens 14 möglichst auszuschließen. Ebenso kann die Grundplatte 26 aus temperaturinvariantem Material bestehen. Die hier als feste und verschiebliche Verbindung angegebenen Winkelstücke 19, 25 bzw. Winkel 27a, 27b dienen lediglich zur Veranschaulichung und können in der Praxis aus ganz anders aufgebauten, aber äquivalenten Mitteln bestehen.

Das Bezugsnormal 24 trägt auf einer ersten Fläche, hier einer Seitenfläche 28, und auf einer zweiten Fläche, hier einer Seitenfläche 30, jeweils ein zweidimensionales Linienraster 29 bzw. 31. Die erste und die zweite Fläche sind also hier die beiden gegenüberliegenden, zueinander parallelen Seitenflächen außen an den Längsseiten der langgestreckten rechteckigen Platte, die das Bezugsnormal 24 bildet.

Das Positionsmesssystem 20 hat zur Erfassung der Linienraster 29, 31 des Bezugsnormals 24
- einen ersten Lesekopf 34 und vertikal beabstandet darunter einen zweiten Lesekopf 36, die beide an dem Tragkörper 22 vorgesehen und dem ersten Linienraster 29 zugeordnet sind,
- einen an dem Tragkörper 22 vorgesehenen dritten Lesekopf 38, der dem zweiten Linienraster 31 zugeordnet ist, und
- einen Abstandssensor 40 zum Erfassen des Abstands zwischen dem Tragkörper 22 und der mit dem ersten Linienraster 29 versehenen Seitenfläche 28 oder irgendeiner dazu parallelen Fläche des Bezugsnormals 24.

Die Anordnung des Tragkörpers 22 an dem Schlitten 14 ist dabei so getroffen, dass weder der Tragkörper noch die Leseköpfe 34, 36, 38 oder der Abstandssensor 40 an irgendeiner Stelle mit dem Bezugsnormal 24 in Berührung kommen können. Der dritte Lesekopf 38 ist vorzugsweise so an dem Tragkörper 22 vorgesehen, dass er dem ersten Lesekopf 34 auf gleicher Höhe wie dieser in Bezug auf die Längserstreckung des Bezugsnormals 24 gegenüberliegt. Der zweite Lesekopf 36 ist so vertikal beabstandet unter dem Lesekopf 34 angeordnet, dass die drei Leseköpfe in einer die Z-Achse enthaltenden Ebene eines Längsschnittes durch das Bezugsnormal 24 in den Ecken eines rechtwinkeligen Dreiecks liegen. In Bezug darauf ist der Abstandssensor 40 in einer definierten Position an dem Tragkörper 22 vorgesehen, nämlich möglichst nahe bei dem ersten Lesekopf 34. Der Tragkörper 22 ist im Querschnitt (d.h. quer zu der Z-Achse) U-förmig und trägt an seinen beiden U-Schenkeln 22', 22" den ersten Lesekopf 34 bzw. den dritten Lesekopf 38. Der U-Schenkel 22' ist dabei vertikal so nach unten verlängert, dass der zweite Lesekopf 36 von dem ersten Lesekopf 34 für eine genaue Messung ausreichend beabstandet ist. Die Leseköpfe 34, 36, 38 sind inkrementelle optische Leseköpfe. Der Abstandssensor 40 ist vorzugsweise ein kapazitiver Sensor, könnte aber auch ein induktiver oder optischer Sensor sein. Bei den zweidimensionalen Linienrastern 29, 31 handelt es sich jeweils um eine Kreuzgitterstruktur. Das Bezugsnormal 24 ist vorzugsweise ein Körper aus Glas (Zerodur®), könnte aber auch ein Körper aus Invar®-Stahl sein, der auch temperaturinvariant ist, sich aber nicht so gut wie Glas zum Aufbringen von Kreuzgitterstrukturen eignet.

In dem in Fig. 1 dargestellten Ausführungsbeispiel ist der Tragkörper 22 auf der Vorderseite des Schlittens 14 befestigt und besteht vorzugsweise auch aus temperaturinvariantem Material. Stattdessen könnte der Tragkörper 22 auch ein integrierender Bestandteil des Schlittens 14 sein.

### Die in Fig. 1 dargestellte Vorrichtung 10 arbeitet folgendermaßen:

Der Tragkörper mit den Leseköpfen 34, 36, 38 und dem Abstandssensor 40 wird mit dem Schlitten 14 an dem Bezugsnormal 24 entlang bewegt, ohne letzteres zu berühren. Die Leseköpfe 34 und 38 erfassen ihre Position in Z- und Y-Richtung relativ zu den jeweils gegenüberliegend angebrachten Linienrastern 29 bzw. 31 des Bezugsnormals 24. Der Lesekopf 36 erfasst nur seine Position in Y-Richtung relativ zu dem auf der rechten Seite des Bezugsnormals 24 aufgebrachten Linienraster 29. Der Abstandssensor 40 erfasst seinen Abstand in X-Richtung zu der Seitenfläche 28 auf der rechten Seite des Bezugsnormals 24. Durch die Anordnung der drei Leseköpfe 34, 36, 38 und des Abstandssensors 40 an genau definierten Positionen in Bezug auf die Leseköpfe an dem Tragkörper 22 können die Position und die räumliche Lage des Tragkörpers 22 und des mit diesem verbundenen Schlittens 14 in Relation zu dem Bezugsnormal 24 bestimmt werden, d.h. die insgesamt sechs translatorischen und rotativen Komponenten X, Y und Z bzw. A, B und C der Bewegung des Tragkörpers 22 und somit des Schlittens 14.

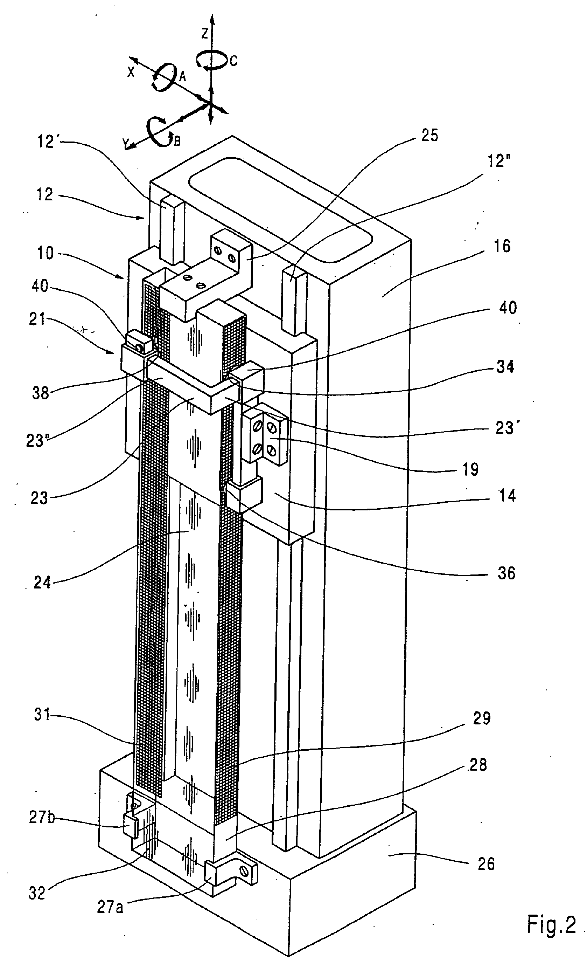

Fig. 2 zeigt ein zweites Ausführungsbeispiel der insgesamt mit 10 bezeichneten Vorrichtung mit einem alternativen Positionsmesssystem 21. Dabei sind die erste und die zweite Fläche, auf denen das Bezugsnormal 24 die zweidimensionalen Linienraster 29 bzw. 31 trägt, die Seitenfläche 28 bzw. eine gegen diese abgewinkelte Stirnfläche 32. Der dritte Lesekopf 38 ist dem Linienraster 31 der Stirnfläche 32 zugeordnet. Benachbart zu dem dritten Lesekopf 38 ist der Abstandssensor 40 an einem Tragkörper 23 vorgesehen, der ein Winkelprofilteil ist, das an seinen beiden Winkelschenkeln 23', 23" den ersten und den zweiten Lesekopf 34, 36 bzw. den dritten Lesekopf 38 trägt. Abgesehen von dem vorstehend beschriebenen unterschiedlichen Aufbau des Positionsmesssystems 21 gegenüber dem des Positionsmesssystems 20 hat die dem Positionsmesssystem 21 zugeordnete Vorrichtung 10 denselben Aufbau und dieselbe Arbeitsweise wie die Vorrichtung 10 nach Fig. 1 und braucht deshalb nicht erneut beschrieben zu werden.

### Bezugszeichenliste

- 10: Vorrichtung
- 12: Führung
- 12', 12": Längsführung
- 14: Schlitten
- 16: Z-Säule
- 19: Winkelstück
- 20: Positionsmesssystem
- 21: Positionsmesssystem
- 22: Tragkörper
- 22', 22": U-Schenkel
- 23: Tragkörper
- 23', 23": Winkelschenkel
- 24: Bezugsnormal
- 25: Winkelstück
- 26: Grundplatte
- 27a, 27b: Winkel
- 28: Seitenfläche
- 29: zweidimensionales Linienraster
- 30: Seitenfläche
- 31: zweidimensionales Linienraster
- 32: Stirnfläche
- 34: erster Lesekopf
- 36: zweiter Lesekopf
- 38: dritter Lesekopf
- 40: Abstandssensor

## Patentansprüche

1. Vorrichtung für Werkzeugmaschinen oder Messgeräte zum Erfassen der räumlichen Lage eines in einer Koordinatenachse verfahrbaren Schlittens (14) in Bezug auf ein Bezugsnormal (24),
mit einem Positionsmesssystem (20) zur Bestimmung der räumlichen Lage des Schlittens (14) mit Hilfe von Linienrastern (29, 31),
**dadurch gekennzeichnet,**
**dass** der Schlitten (14) längs einer Führung (12) verfahrbar ist,
**dass** das Bezugsnormal (24) ein prismatisches Bezugsnormal ist mit vorzugsweise polygonalem Querschnitt, das sich parallel zu der Führung (12) des Schlittens (14) erstreckt,
**dass** das Positionsmesssystem (20) zur Bestimmung der räumlichen Lage eines mit dem Schlitten (14) fest verbundenen oder in den Schlitten integrierten Tragkörpers (22; 23) ausgebildet ist,
**dass** eine erste und eine zweite Fläche (28, 30; 28, 32) des Bezugsnormals (24) zweidimensionale Linienraster (29, 31) tragen,
**dass** das Positionsmesssystem (20) zur Erfassung der Linienraster (29, 31) des Bezugsnormals (24) aufweist
- einen ersten Lesekopf (34) und einen beabstandeten zweiten Lesekopf (36), die an dem Tragkörper (22; 23) vorgesehen und einem ersten (29) der zweidimensionalen Linienraster (29, 31) zugeordnet sind,
- einen an dem Tragkörper (22; 23) vorgesehenen dritten Lesekopf (38), der einem zweiten (31) der zweidimensionalen Linienraster (29, 31) zugeordnet ist,
- einen Abstandssensor (40) zum Erfassen des Abstands zwischen dem Tragkörper (22; 23) und einer (28) der mit einem zweidimensionalen Linienraster (29, 31) versehenen Flächen (28, 30; 28, 32) oder einer dazu parallelen Fläche, und
**dass** die Anordnung des Tragkörpers (22; 23) an dem Schlitten (14) so getroffen ist, dass der Tragkörper (22; 23) bei dem Erfassungsvorgang nicht mit dem Bezugsnormal (24) in Berührung kommen kann.

2. Vorrichtung nach Anspruch 1, **dadurch gekennzeichnet, dass** die erste und die zweite Fläche (28, 30) zwei einander gegenüberliegende, zueinander parallele Seitenflächen (28, 30) des Bezugsnormals (24) sind.

3. Vorrichtung nach Anspruch 1, **dadurch gekennzeichnet, dass** die erste und die zweite Fläche (28, 32) eine Seitenfläche (28) und eine gegen diese abgewinkelte Stirnfläche (32) des Bezugsnormals (24) sind.

4. Vorrichtung nach einem der Ansprüche 1 bis 3, **dadurch gekennzeichnet, dass** der Abstandssensor (40) in einer definierten Position in Bezug auf die Leseköpfe an dem Tragkörper (22; 23) vorgesehen ist.

5. Vorrichtung nach einem der Ansprüche 1 bis 4, **dadurch gekennzeichnet, dass** das Bezugsnormal (24) aus einem temperaturinvarianten Material besteht.

6. Vorrichtung nach einem der Ansprüche 1 bis 5, **dadurch gekennzeichnet, dass** der Tragkörper (22; 23) aus einem temperaturinvarianten Material besteht.

7. Vorrichtung nach einem der Ansprüche 1 bis 6, **dadurch gekennzeichnet, dass** das Bezugsnormal (24) zur Anordnung zwischen zwei beabstandeten Längsführungen (12', 12"), welche die Führung (12) des Schlittens (14) bilden, ausgestaltet ist.

8. Vorrichtung nach einem der Ansprüche 1 bis 7, **dadurch gekennzeichnet, dass** das Bezugsnormal (24) eine langgestreckte rechteckige Platte ist.

9. Vorrichtung nach den Ansprüchen 2 und 8, **dadurch gekennzeichnet, dass** der Tragkörper (22) im Querschnitt U-förmig ist und an seinen beiden U-Schenkeln (22', 22") den ersten und zweiten bzw. den dritten Lesekopf (34, 36 bzw. 38) trägt.

10. Vorrichtung nach den Ansprüchen 3 und 8, **dadurch gekennzeichnet, dass** der Tragkörper (23) ein Winkelprofilteil ist und an seinen beiden Winkelschenkeln (23', 23") den ersten und zweiten bzw. den dritten Lesekopf (34, 36 bzw. 38) trägt.

11. Vorrichtung nach einem der Ansprüche 1 bis 10, **dadurch gekennzeichnet, dass** der dritte Lesekopf (38) an dem Tragkörper (22; 23) so vorgesehen ist, dass er dem ersten oder dem zweiten Lesekopf (34, 36) auf gleicher Höhe wie dieser in Bezug auf die Längserstreckung des Bezugsnormals (24) gegenüberliegt.

## Claims

1. A device for machine tools or measuring apparatus for detecting a spatial position of a carriage (14) movable longitudinally in a coordinate axis with respect to a reference standard (24),
comprising a position measuring system (20) for determining the spatial position of a carriage (14) by means of line gratings (29, 31),
**characterized in**
**that** the carriage (14) is movable along a guide (12),
**that** the reference standard (24) is a prismatic reference standard of preferably polygonal cross-section, which extends parallel to the guide (12) of the carriage (14),
**that** the position measuring systems (20) is adapted to determine the spatial position of a support member (22; 23) fixedly connected with or integrated into the carriage (14),
**that** a first and second surfaces (28, 30; 28, 32) of the reference standard (24) carry two-dimensional line gratings (29, 31),
**that** for detecting the line gratings (29, 31) of the reference standard (24), the position measuring system (20) comprises:
- a first reading head (34) and, spaced therefrom, a second reading head (36), which are provided on the support member (22; 23) and associated with a first one (29) of the two-dimensional line gratings (29, 31),
- a third reading head (38) provided on the support member (22; 23) and associated with a second one (31) of the two-dimensional line gratings (29, 31),
- a distance sensor (40) for detecting the distance between the support member (22; 23) and one (28) of the surfaces (28, 30; 28, 32) provided with a two-dimensional line grating (29, 31) or any surface parallel thereto, and
**that** the support member (22; 23) is arranged on the carriage (14) in such a manner that the support member (22; 23) is prevented from contacting the reference standard (24) during the detection operation.

2. The device as claimed in claim 1, **characterized in that** the first and second surface (28, 30) are two opposed, parallel lateral surfaces (28, 30) of the reference standard (24).

3. The device as claimed in claim 1, **characterized in that** the first and second surface (28, 32) of the reference standard (24) are, respectively, one lateral surface (28) and one end surface (32) arranged at an angle thereto.

4. The device as claimed in any one of the claims 1 to 3, **characterized in that** the distance sensor (40) is provided on the support member (22; 23) in a defined position with respect to the reading heads.

5. The device as claimed in any one of the claims 1 to 4, **characterized in that** the reference standard (24) is made of a temperature-invariant material.

6. The device as claimed in any one of the claims 1 to 5, **characterized in that** the support member (22; 23) is made of a temperature-invariant material.

7. The device as claimed in any one of the claims 1 to 6, **characterized in that** the reference standard (24) is configured for arrangement between two spaced longitudinal guideways (12', 12") forming the guide (12) for the carriage (14).

8. The device as claimed in any one of the claims 1 to 7, **characterized in that** the reference standard (24) is an elongate rectangular plate.

9. The device as claimed in claims 2 and 8, **characterized in that** the support member (22) is U-shaped in cross-section and carries on its two U legs (22', 22") the first and second and, respectively, third reading head (34, 36 and 38, respectively).

10. The device as claimed in claims 3 and 8, **characterized in that** the support member (23) is an angle bracket carrying on its two angle arms (23', 23") the first and second and, respectively, third reading head (34, 36 and 38, respectively).

11. The device as claimed in any one of the claims 1 to 10, **characterized in that** the third reading head (38) is provided on the support member (22; 23) in such a manner that it lies opposite and level with the first or the second reading head (34, 36) with respect to the longitudinal dimension of the reference standard (24).

## Revendications

1. Dispositif pour des machines-outils ou des appareils de mesure destinés à détecter la position dans l'espace d'un chariot (14), mobile dans un axe de coordonnées, par rapport à un étalon de référence (24),
comportant un système de mesure de position (20) destiné à déterminer la position dans l'espace du chariot (14) au moyen de réseaux réguliers (29, 31),
**caractérisé**
**en ce que** le chariot (14) est mobile le long d'une glissière (12),
**en ce que** l'étalon de référence (24) est un étalon de référence prismatique avec une section de préférence polygonale, qui s'étend parallèlement à la glissière (12) du chariot (14),
**en ce que** le système de mesure de position (20) est conçu pour déterminer la position dans l'espace d'un corps de support (22 ; 23), relié de manière fixe au chariot (14) ou intégré dans ledit chariot,
**en ce qu'**une première et une deuxième surface (28, 30 ; 28, 32) de l'étalon de référence (24) portent des réseaux réguliers (29, 31) bidimensionnels,
**en ce que** le système de mesure de position (20), destiné à détecter les réseaux réguliers (29, 31) de l'étalon de référence (24), comporte
- une première tête de lecture (34) et une deuxième tête de lecture (36) écartée de celle-ci, lesquelles sont prévues sur le corps de support (22 ; 23) et sont associées à un premier (29) des réseaux réguliers (29, 31) bidimensionnels,
- une troisième tête de lecture (38), qui est prévue sur le corps de support (22 ; 23) et qui est associée à un deuxième (31) des réseaux réguliers (29, 31) bidimensionnels,
- un capteur de distance (40) destiné à détecter la distance entre le corps de support (22 ; 23) et une (28) des surfaces (28, 30 ; 28, 32) munies d'un réseau régulier (29, 31) bidimensionnel ou une surface parallèle à celle-ci, et
**en ce que** le corps de support (22 ; 23) est agencé sur le chariot (14), de telle sorte que le corps de support (22 ; 23) ne peut pas entrer en contact avec l'étalon de référence (24) pendant le processus de détection.

2. Dispositif selon la revendication 1, **caractérisé en ce que** la première et la deuxième surface (28, 30) sont deux surfaces latérales (28, 30) de l'étalon de référence (24), opposées l'une à l'autre et parallèles entre elles.

3. Dispositif selon la revendication 1, **caractérisé en ce que** la première et la deuxième surface (28, 32) sont une surface latérale (28) et une surface frontale (32), pliée par rapport à celle-ci, de l'étalon de référence (24).

4. Dispositif selon l'une quelconque des revendications 1 à 3, **caractérisé en ce que** le capteur de distance (40) est prévu dans une position définie par rapport aux têtes de lecture sur le corps de support (22 ; 23).

5. Dispositif selon l'une quelconque des revendications 1 à 4, **caractérisé en ce que** l'étalon de référence (24) est réalisé dans un matériau invariable à la température.

6. Dispositif selon l'une quelconque des revendications 1 à 5, **caractérisé en ce que** le corps de support (22 ; 23) est réalisé dans un matériau invariable à la température.

7. Dispositif selon l'une quelconque des revendications 1 à 6, **caractérisé en ce que** l'étalon de référence (24) est conçu pour être agencé entre deux glissières longitudinales (12', 12") écartées l'une de l'autre et formant la glissière (12) du chariot (14).

8. Dispositif selon l'une quelconque des revendications 1 à 7, **caractérisé en ce que** l'étalon de référence (24) est une plaque rectangulaire allongée.

9. Dispositif selon les revendications 2 et 8, **caractérisé en ce que** le corps de support (22) a une section en forme de U et porte sur les deux branches du U (22', 22") la première et la deuxième ou la troisième tête de lecture (34, 36 ou 38).

10. Dispositif selon les revendications 3 et 8, **caractérisé en ce que** le corps de support (23) est un profilé angulaire et porte sur ses deux branches (23', 23") la première et la deuxième ou la troisième tête de lecture (34, 36 ou 38).

11. Dispositif selon l'une quelconque des revendications 1 à 10, **caractérisé en ce que** la troisième tête de lecture (38) est prévue sur le corps de support (22 ; 23) de telle sorte qu'elle est située en face de la première ou de la deuxième tête de lecture (34, 36) à la même hauteur que celle-ci par rapport à la dimension longitudinale de l'étalon de référence (24) .
